# EUROPÄISCHE PATENTSCHRIFT

(11) **EP 1 707 294 B1**
(45) Veröffentlichungstag und Bekanntmachung des Hinweises auf die Patenterteilung: **14.08.2013**
(21) Anmeldenummer: 06005817.9
(22) Anmeldetag: 22.03.2006
(51) Int. Cl.: B23H 9/10, B23H 7/26

(54) **Verfahren und Vorrichtung zum Herstellen von Bauteilen mit einer dreidimensional geformten Oberfläche**
Method and apparatus for manufacturing workpieces having a three dimensionally formed surface
Méthode et appareil pour usiner des pièces de travail qui ont une surface formée en trois dimensions

(30) Priorität: 31.03.2005 DE 102005014598
(43) Veröffentlichungstag der Anmeldung: 04.10.2006
(73) Patentinhaber: MTU Aero Engines AG, 80995 München (DE)
(72) Erfinder: Bayer, Erwin, 85221 Dachau (DE); Platz, Albin, 86510 Ried-Baindlkirch (DE)

(56) Entgegenhaltungen:
- EP-A- 0 292 213
- EP-A- 1 430 983
- GB-A- 2 270 644
- US-A- 5 149 405

## Beschreibung

Die Erfindung betrifft ein Verfahren zum Herstellen von Bauteilen, wie zum Beispiel von Gasturbinenbauteilen oder von Zahnrädern oder von medizintechnischen Implataten, mit einer dreidimensional geformten Oberfläche. Des weiteren betrifft die Erfindung eine Vorrichtung zum Herstellen von Bauteilen mit einer dreidimensional geformten Oberfläche.

Ein derartiges Verfahren und eine derartige Vorrichtung sind aus GB2270644 bekannt, welches im Zusammenhang die Merkmale der Oberbegriffe der Ansprüche 1 und 9 offenbart.

Im Flugtriebwerksbau kommen als Gasturbinenrotoren zunehmend integral beschaufelte Rotoren zum Einsatz, wobei bei solchen integral beschaufelten Gasturbinenrotoren die Laufschaufeln integraler Bestandteil des Rotors bzw. eines Rotorgrundkörpers sind. Solche integral beschaufelten Rotoren werden auch als Blisk (Bladed Disk) oder Bling (Bladed Ring) bezeichnet, und zwar abhängig davon, ob ein scheibenförmiger oder ringförmiger Rotorgrundkörper vorliegt. Integral beschaufelte Gasturbinenrotoren bestehen aus metallischen Werkstoffen, insbesondere aus schwer zerspanbaren Werkstoffen, wie Titanbasislegierungen, Nickelbasislegierungen oder Kobaltbasislegierungen. Nach dem Stand der Technik kommen zur Herstellung dreidimensional geformter Oberflächen bzw. aerodynamischer Strukturen an den Laufschaufeln solcher integral beschaufelten Gasturbinenrotoren zerspanende Bearbeitungsverfahren, wie zum Beispiel Fräsverfahren, zum Einsatz. Das Herstellen dreidimensional geformter Oberflächen bzw. aerodynamischer Strukturen an den Laufschaufeln integral beschaufelter Rotoren aus schwer zerspanbaren Werkstoffen mit Fräsverfahren erfordert einen hohen Aufwand und ist äußerst zeitintensiv sowie kostenintensiv. Des weiteren ist in der Regel eine Nachbearbeitung erforderlich.

Der vorliegenden Erfindung liegt das Problem zu Grunde, ein neuartiges Verfahren sowie eine entsprechende Vorrichtung zum Herstellen von Bauteilen mit einer dreidimensional geformten Oberfläche zu schaffen.

Dieses Problem wird durch ein Verfahren gemäß Patentanspruch 1 gelöst. Erfindungsgemäß umfasst das Verfahren zumindest die folgenden Schritte: a) Bereitstellen eines insbesondere vorgeformten Werkstücks mit einem bestimmten Aufmass; b) Bereitstellen mindestens einer Arbeitselektrode, wobei die Kontur der oder jeder Arbeitselektrode an die Kontur der herzustellenden, dreidimensional geformten Oberfläche angepasst ist; c) Absenken der dreidimensional geformten Oberfläche durch Anordnen des vorgeformten Werkstücks und der oder jeder Arbeitselektrode in einem Elektrolyten und durch Anlegen einer elektrischen Spannung bzw. eines elektrischen Stroms, wobei die oder jede Arbeitselektrode im Sinne einer kreisförmigen Zustellbewegung in Richtung auf das Werkstück bewegt wird.

Mit der hier vorliegenden Erfindung wird eine einfache sowie schnelle Möglichkeit zur Herstellung dreidimensional geformter Oberflächen bzw. aerodynamischer Strukturen an Werkstücken geschaffen, die durch eine hohe Präzision bzw. Genauigkeit im Mikrometerbereich gekennzeichnet ist. Die Oberflächen bzw. aerodynamischen Strukturen lassen sich mit einer Genauigkeit herstellen, die eine Nachbearbeitung überflüssig macht.

Nach einer vorteilhaften Weiterbildung der Erfindung wird der kreisförmigen Zustellbewegung der oder jeder Arbeitselektrode in Richtung auf das Werkstück eine pulsierende bzw. periodische Bewegung in Richtung der Zustellbewegung überlagert, um Spalte zwischen der oder jeder Arbeitselektrode und dem Bauteil einer Zwangsspülung derselben mit Elektrolyt zu unterziehen. Gegebenfalls kann der kreisförmigen Zustellbewegung der oder jeder Arbeitselektrode in Richtung auf das Werkstück weiterhin eine lineare Zustellbewegung überlagert werden.

Vorzugsweise werden mit dem erfindungsgemäßen Verfahren als dreidimensional geformte Oberflächen Saugseitenkonturen und Druckseitenkonturen an Laufschaufeln eines integral beschaufelter Rotors hergestellt; wobei hierzu ein integral beschaufelter Rotor aus einem Rotorgrundkörper und integral am Rotorgrundkörper befestigten Laufschaufeln, die ein bestimmtes Aufmass aufweisen, bereitgestellt wird; wobei hierzu weiterhin mindestens zwei Arbeitselektroden für mindestens eine Laufschaufel bereitgestellt werden, deren Kontur an die Kontur einer herzustellenden Saugseitenkontur und einer herzustellenden Druckseitenkontur der jeweiligen Laufschaufel angepasst ist; und wobei hierzu weiterhin zum gleichzeitigen Absenken der Saugseitenkontur und Druckseitenkontur im Bereich mindestens einer Laufschaufel die entsprechenden Arbeitselektroden im Sinne einer gegensinnigen, kreisförmigen Zustellbewegung in Richtung auf die jeweilige Laufschaufel bewegt werden.

Durch eine Parallelisierbarkeit des obigen Verfahrens, also durch gleichzeitiges Herstellen aerodynamischer Strukturen an mehreren Laufschaufeln, ist die Bearbeitungszeit an integral beschaufelten Rotoren reduzierbar, sodass eine erhebliche Produktivitätssteigerung realisiert werden kann.

Die erfindungsgemäße Vorrichtung zum Herstellen von Bauteilen mit einer dreidimensional geformten Oberfläche ist Patentanspruch 9 definiert. Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine nicht erfindungsgemäße Vorrichtung zum Herstellen von Bauteilen mit einer dreidimensional geformten Oberfläche in schematisierter Darstellung zusammen mit einem Werkstück.
- Fig. 2: eine nicht erfindungsgemäße Vorrichtung zum Herstellen von Bauteilen mit einer dreidimensional geformten Oberfläche in schematisierter Darstellung zusammen mit einem Werkstück;
- Fig. 3: eine erfindungsgemäße Vorrichtung zum Herstellen von Bauteilen mit einer dreidimensional geformten Oberfläche in schematisierter Darstellung zusammen mit einem Werkstück nach einem Ausführungsbeispiel der Erfindung;
- Fig. 4: eine erfindungsgemäße Vorrichtung zum Herstellen von Bauteilen mit einer dreidimensional geformten Oberfläche in schematisierter Darstellung zusammen mit einem Werkstück nach einem Ausführungsbeispiel der Erfindung.

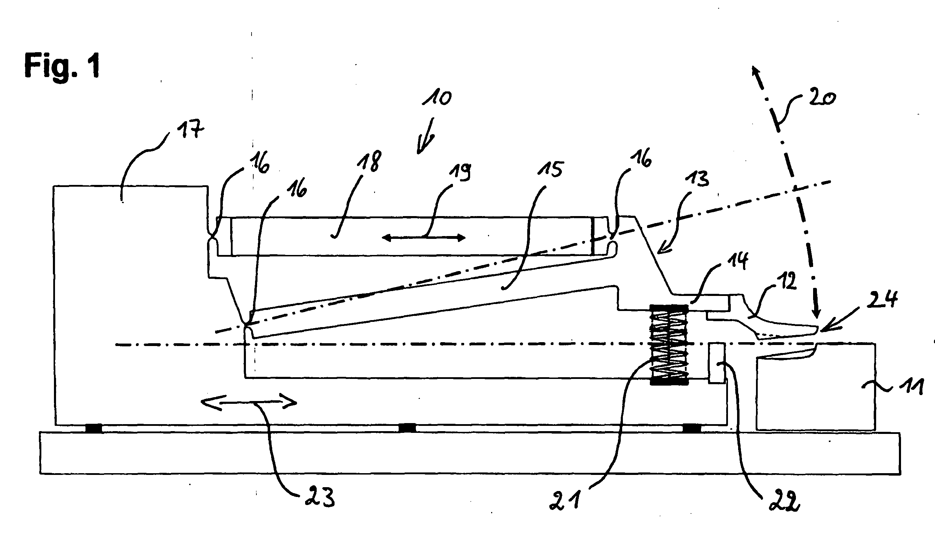

Nachfolgend wird die hier vorliegende Erfindung unter Bezugnahme auf Fig. 1 bis 4 in größerem Detail beschrieben.

Fig. 1 zeigt ein erstes Ausführungsbeispiel einer nicht erfindungsgemäßen Vorrichtung zum Herstellen von Bauteilen mit einer dreidimensional geformten Oberfläche zusammen mit einem Werkstück 11, wobei es sich bei dem Werkstück 11 um ein vorgeformtes Werkstück mit einem bestimmten Aufmaß handelt.

Die Vorrichtung 10 verfügt im gezeigten Beispiel über eine Arbeitselektrode 12, wobei die Kontur der Arbeitselektrode 12 an die Kontur der dreidimensionalen Oberfläche des herzustellenden Bauteils angepasst ist. Die Arbeitselektrode 12 ist an einem Träger 13 befestigt bzw. gelagert. Der Träger 13 umfasst einen Befestigungsabschnitt 14 für die Arbeitselektrode 12 sowie einen Hebelarm 15.

Der Befestigungsabschnitt 14 ist mit dem Hebelarm 15 fest verbunden. Der Hebelarm 15 ist mit einem Gestell bzw. einem Rahmen 17 der erfindungsgemäßen Vorrichtung 10 über ein Festkörpergelenk 16 verbunden. Der Rahmen 17 ist in zwei Dimensionen torsionssteif ausgeführt. Am Hebelarm 15 greift gemäß Fig. 1 ein Stellglied 18 an. Das Stellglied 18 ist über Festkörpergelenke 16 einerseits am Hebelarm 15 und andererseits am Rahmen 17 angelenkt. Über das Stellglied 18 ist der Hebelarm 15 und damit die Arbeitselektrode 12 entlang einer kreisförmigen Zustellbewegung in Richtung auf das Werkstück 11 bewegbar.

Das Stellglied 18 ist vorzugsweise als Piezosteller ausgebildet, wobei der Piezosteller im Sinne des Doppelpfeils 19 eine Längung oder Verkürzung ausführen kann. Die Längung oder Verkürzung des als Piezosteller ausgebildeten Stellglieds 18 wird vom Hebelarm 15 in eine Schwenkbewegung der Arbeitselektrode 12 entlang einer Kreisbahn 20 umgesetzt. Zum Absenken einer dreidimensional geformten Oberfläche am Werkstück 11 wird demnach mit der erfindungsgemäßen Vorrichtung 10 die Arbeitselektrode 12 entlang einer kreisförmigen Zustellbewegung in Richtung auf das Werkstück 11 bewegt. Die Bewegung der Arbeitselektrode 12 erfolgt dabei entgegen einer von einem Federelement 21 bereitgestellten Federkraft, wobei das Federelement 21 einerseits am Rahmen 17 und andererseits am Befestigungsabschnitt 14 des schwenkbaren Trägers 13 angreift.

Die Schwenkbewegung der Arbeitselektrode 12 in Richtung auf das Werkstück 11 wird gemäß Fig. 1 von einem Anschlag 22 begrenzt. Der Anschlag 22 ist dabei Bestandteil des Rahmens 17 der erfindungsgemäßen Vorrichtung 10. Die gesamte erfindungsgemäße Vorrichtung 10 kann zusammen mit der Arbeitselektrode 12 im Sinne des Doppelpfeils 23 linear relativ zum zu bearbeitenden Werkstück 11 verfahren werden, um die Vorrichtung 10 und somit die Arbeitselektrode 12 in eine Arbeitsposition relativ zum Werkstück 11 auszurichten.

Mithilfe der in Fig. 1 dargestellten Vorrichtung 10 kann ein schnelles, einfaches sowie hoch präzises Absenken einer dreidimensionalen Oberfläche am Werkstück 11 erfolgen. Hierzu wird erfindungsgemäß wie folgt vorgegangen: Zuerst wird ein Werkstück 11 bereitgestellt, wobei das Werkstück 11 im Hinblick an das herzustellende Bauteil vorgeformt ist und über ein bestimmtes Aufmaß verfügt, um durch Absenken mit einem elektrochemischen Abtragprozess die gewünschte dreidimensional geformte Oberfläche herzustellen. Ebenso wird die Vorrichtung 10 mit der Arbeitselektrode 12 bereitgestellt, wobei die Kontur der Arbeitselektrode 12 an die Kontur der herzustellenden, dreidimensional geformten Oberfläche angepasst ist. Das Absenken der dreidimensional geformten Oberfläche erfolgt durch einen Precise Electro Chemical Machining (PECM) Prozess, und zwar derart, dass zumindest die Arbeitselektrode 12 und das Werkstück 11 in einem Elektrolyten positioniert werden. Weiterhin wird eine elektrische Spannung bzw. ein elektrischer Strom angelegt, wobei dann die Arbeitselektrode 12 im Sinne der durch den Pfeil 20 visualisierten, kreisförmigen Zustellbewegung bzw. Schwenkbewegung in Richtung auf das Werkstück 11 bewegt wird. Das zwischen dem Hebelarm 15 des Trägers 13 und dem Rahmen 17 ausgebildete Festkörpergelenk 16 dient hierbei als Drehpunkt für den Träger 13 und damit die Arbeitselektrode 12.

Zum Absenken einer dreidimensionalen Oberfläche am Werkstück 11 wird demnach die Vorrichtung 10 und damit die Arbeitselektrode 12 im Sinne einer Zustellbewegung (Pfeil 23) in Richtung auf das Werkstück 11 bewegt und gegenüber dem Werkstück 11 vorpositioniert, und zwar derart, dass zwischen der Arbeitselektrode 12 und dem Werkstück 11 ein Spalt 24 ausgebildet ist, der in der Größenordnung zwischen 1 mm und 2 mm liegt. Durch den Spalt 24 kann Elektrolyt zwischen der Arbeitselektrode 12 und dem Werkstück 11 fließen. Sodann wird ein elektrischer Strom, vorzugsweise ein pulsierender Gleichstrom, bzw. eine elektrische Spannung, vorzugsweise eine pulsierende Gleichspannung, an die Arbeitselektrode 12 angelegt, und die Arbeitselektrode 12 wird über das Stellglied 18 im _{S}inne einer kreisförmigen Schwenkbewegung bzw. Zustellbewegung auf das Werkstück 11 bewegt. Das Verschwenken der Arbeitselektrode 12 erfolgt dabei mit einer Geschwindigkeit in der Größenordnung zwischen 0,01 mm/min und 2,50 mm/min.

Dieser kreisförmigen Zustellbewegung der Arbeitselektrode 12 wird vorzugsweise eine pulsierende bzw. periodische Bewegung überlagert. Über diese der kreisförmigen Zustellbewegung überlagerte, pulsierende bzw. periodische Bewegung ist der Spalt 24 mit Elektrolyt zwangsspülbar. Im Ausführungsbeispiel der Fig. 1 wird diese pulsierende bzw. periodische Bewegung der Arbeitselektrode 12 ebenfalls vom Stellglied 18 hervorgerufen. Hierdurch wird der Spalt 24 zwischen der Arbeitselektrode 12 und dem Werkstück 11 periodisch verkleinert bzw. vergrößert. Die Amplitude der pulsierenden bzw. periodischen Bewegung liegt dabei vorzugsweise zwischen 0,01 mm und 2,5 mm.

Das Ende des elektrochemischen Absenkprozesses bzw. Abtragprozesses ist in Fig. 1 dann erreicht, wenn die Arbeitselektrode 12 im Sinne der kreisförmigen Zustellbewegung derart auf das Werkstück 11 zubewegt worden ist, dass die Arbeitselektrode 12 am Anschlag 22 anliegt und demnach ein weiteres Zuschwenken der Arbeitselektrode 12 auf das Werkstück 11 nicht weiter möglich ist. In diesem Fall ist dann die herzustellende, dreidimensional geformte Oberfläche komplett abgesenkt und die Vorrichtung 10 kann vorzugsweise nach Abschwenken der Arbeitselektrode 12 vom Werkstück 11 weg bewegt bzw. abgestellt werden.

Wie bereits erwähnt, wird als elektrischer Strom bzw. elektrische Spannung zum Absenken vorzugsweise ein gepulster Gleichstrom bzw. eine gepulste Gleichspannung verwendet. Die Pulsfrequenz liegt dabei vorzugsweise zwischen 1 Hz und 10 kHz, wobei beim Pulsen vorzugsweise zwischen zwei Strompotentialen bzw. Spannungspotentialen hin- und hergeschaltet wird.

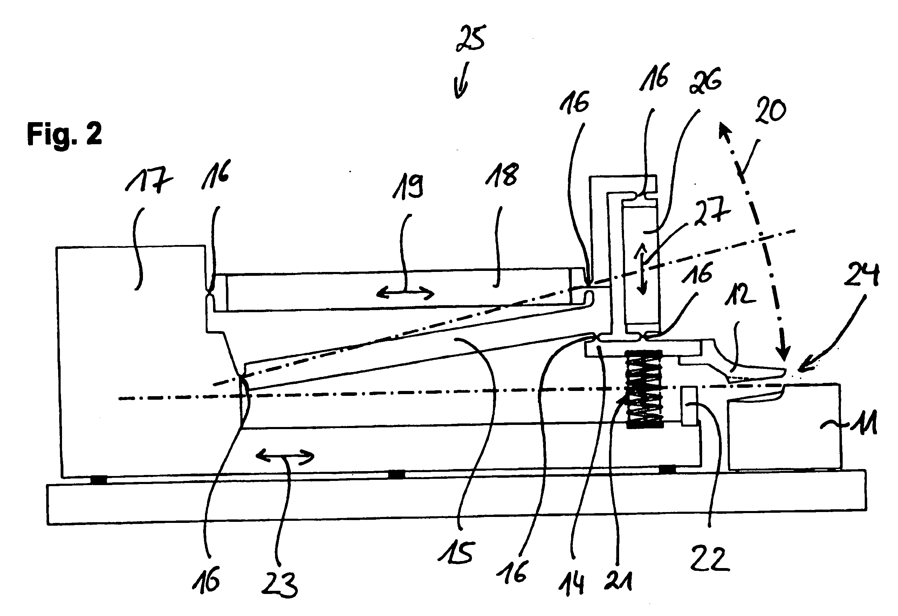

Ein zweites Beispiel einer nicht erfindungsgemäßen Vorrichtung 25 zeigt Fig. 2, wobei die Vorrichtung 25 der Fig. 2 im Wesentlichen der Vorrichtung 10 der Fig. 1 entspricht. Daher werden zur Vermeidung unnötiger Wiederholungen für gleiche Baugruppen gleiche Bezugsziffern verwendet. Nachfolgend wird nur auf die Details eingegangen, die das Ausführungsbeispiel der Fig. 2 vom Ausführungsbeispiel der Fig. 1 unterscheidet. Im Ausführungsbeispiel der Fig. 2 verfügt die Vorrichtung 25 zusätzlich zu dem Stellelement 18, welches für die kreisförmige Schwenkbewegung (Pfeil 20) der Arbeitselektrode 12 relativ zum Werkstück 11 sorgt, ein zusätzliches Stellelement 26. Das Stellelement 26 ist wiederum als Piezosteller ausgeführt und kann im Sinne des Doppelpfeils 27 eine Längung oder Verkürzung ausführen. Das Stellelement 26 dient im Ausführungsbeispiel der Fig. 2 dem Aufbringen der pulsierenden bzw. periodischen Bewegung, die in Richtung der Zustellbewegung der kreisförmigen Zustellbewegung überlagert wird, um eine Zwangsspülung des Spalts 24 mit Elektrolyt zu bewerkstelligen. Der Vorteil dieser Variante liegt darin, dass bei einer synchronisierten Überlagerung der durch das Stellelement 18 erzeugten, kreisförmigen Zustellbewegung mit der durch das Stellelement 26 verursachten pulsierenden bzw. periodischen Bewegung, die üblicherweise sinusförmige, pulsierende bzw. periodische Bewegung in eine trapezförmige Bewegung mit steilen Flanken umgewandelt werden kann. Der Absenkvorgang kann dann so ausgestaltet werden, dass während der Einschaltdauer des Absenkstroms keine Relativbewegung zwischen dem Werkstück 11 und der Arbeitselektrode 12 stattfindet und der gesamte Absenkprozess in einem quasistationären Zustand bei konstantem Spalt 24 erfolgt.

Der kreisförmigen Zustellbewegung der Arbeitselektrode 12 in Richtung auf das Werkstück (Pfeil 20) und der dieser Zustellbewegung überlagerten, pulsierenden bzw. periodischen Bewegung kann weiterhin eine lineare Zustellbewegung (Pfeil 23) der Arbeitselektrode 12 überlagert werden.

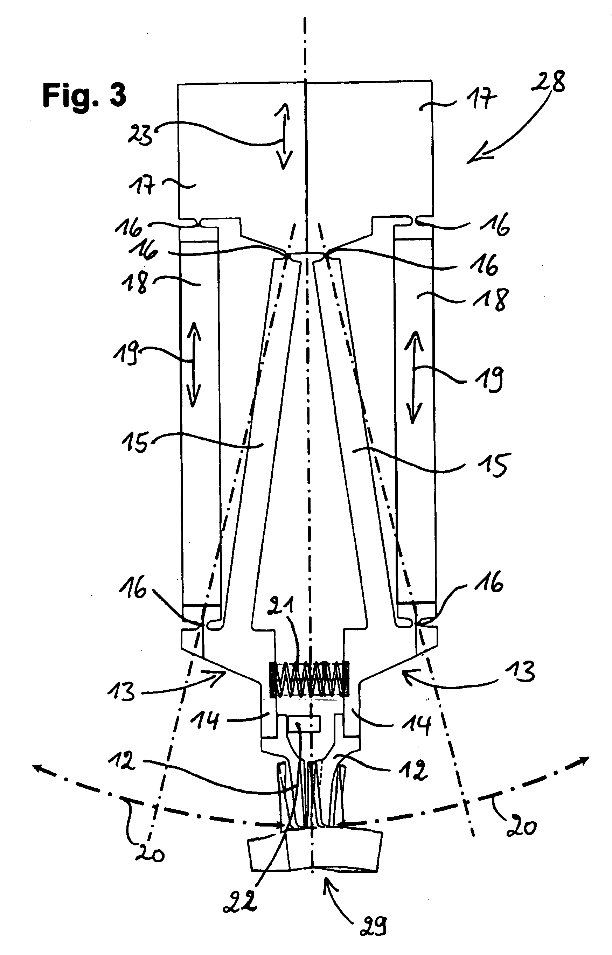

Ein Ausführungsbeispiel einer erfindungsgemäßen Vorrichtung 28 zeigt Fig. 3, wobei die Vorrichtung 28 der Fig. 3 dem Absenken von aerodynamischen Strukturen an einem integral beschaufelten Rotor 29 dient. Als aerodynamische Strukturen werden am integral beschaufelten Rotor 29 vorzugsweise Saugseitenkonturen und Druckseitenkonturen von Laufschaufeln des integral beschaufelten Rotors 29 hergestellt.

Die Vorrichtung 28 des Ausführungsbeispiels der Fig. 3 ist aus zwei spiegelbildlich zueinander positionierten Vorrichtungen gemäß Fig. 1 zusammengesetzt. Demnach verfügt die Vorrichtung 28 des Ausführungsbeispiels der Fig. 3 über zwei Arbeitselektroden 12, wobei die Kontur einer der beiden Arbeitselektroden 12 an die Kontur der herzustellenden Saugseitenkontur und die Kontur der anderen Arbeitselektrode 12 an die Kontur der herzustellenden Druckseitenkontur einer Laufschaufel des integral beschaufelten Rotors 29 angepasst ist. Die beiden Arbeitselektroden 28 sind an jeweils einem Träger 13 befestigt bzw. gelagert, wobei an den Trägern 13 jeweils ein Stellelement 18 angreift. Mithilfe der Stellelemente 18 können die Träger und damit die Arbeitselektroden 12 im Sinne einer gegensinnigen, kreisförmigen Schwenkbewegung bzw. Zustellbewegung aufeinander zu sowie voneinander weg bewegt werden. Das Verschwenken der beiden Arbeitselektroden 12 auf den durch die Pfeile 20 visualisierten Kreisbahnen erfolgt dabei um parallel zueinander verlaufende Achsen. Die Stellglieder 18 sind im Ausführungsbeispiel der Fig. 3 wiederum derart ausgebildet, dass der gegensinnigen Schwenkbewegung der beiden Arbeitselektroden 12 eine pulsierende bzw. periodische Bewegung überlagert werden kann, mithilfe derer periodisch bzw. pulsierend der Abstand der Arbeitselektroden von der Laufschaufel vergrößert bzw. verkleinert werden kann.

Im gezeigten Ausführungsbeispiel der Fig. 3 greift an beiden Befestigungsabschnitten 14 der Träger 13 ein gemeinsames Federelement 21 an. Weiterhin ist lediglich ein einziger Anschlag 22 vorhanden, welcher das aufeinander Zuschwenken der Arbeitselektroden 12 im Sinne einer Endposition für den Absenkvorgang begrenzt.

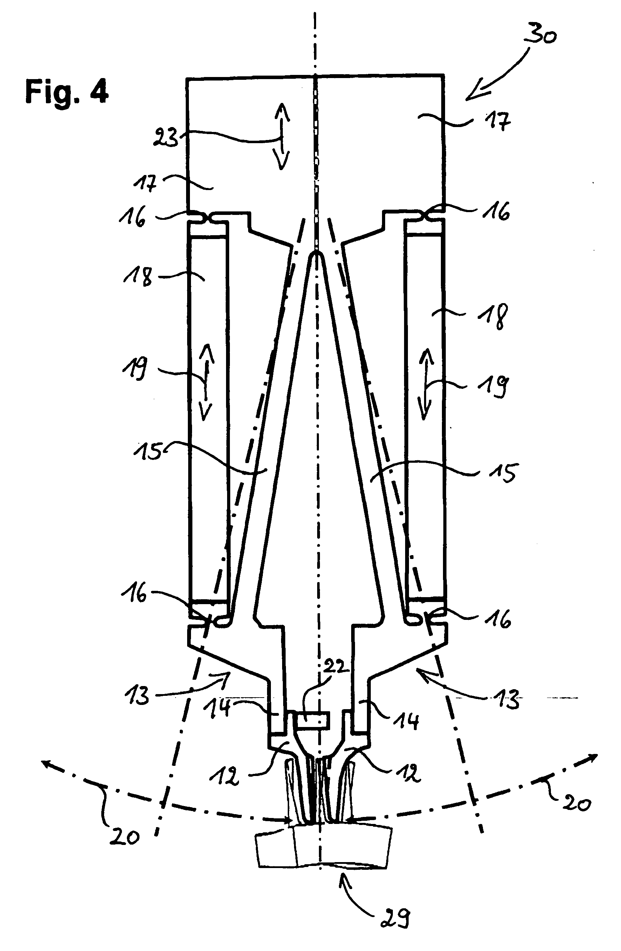

Ein weiteres Ausführungsbeispiel einer erfindungsgemäßen Vorrichtung 30 zum Herstellen von Bauteilen mit einer dreidimensionalen geformten Oberfläche zeigt Fig. 4, wobei die Vorrichtung 30 der Fig. 4 wiederum dem Absenken von Saugseitenkonturen und Druckseitenkonturen an Laufschaufeln eines integral beschaufelten Rotors 29 dient und aus zwei spiegelbildlich zueinander positionierten Vorrichtungen ähnlich Fig. 3 zusammengesetzt ist. Es werden daher wiederum für gleiche Baugruppen gleiche Bezugsziffern verwendet und es kann auf die obigen Ausführungen verwiesen werden. Im Gegensatz zu Fig. 3 ist im Ausführungsbeispiel der Fig. 4 der Hebelarm 15 als fest mit dem Rahmen 17 verbundener Federstab ausgeführt, sodass die Feder 21 entfällt.

Mit den in Fig. 1 bis 4 gezeigten, Vorrichtungen sowie dem mithilfe der Vorrichtungen durchführbaren, Verfahren ist eine hochgenaue, einfache sowie schnelle Herstellung dreidimensional geformte Oberflächen an Bauteilen, insbesondere von Saugseitenkonturen und Druckseitenkonturen an Laufschaufeln integral beschaufelter Rotoren, möglich. Die erzielte Genauigkeit liegt dabei im Mikrometerbereich, so dass auf eine Nachbearbeitung verzichtet werden kann. Die erfindungsgemäße Vorrichtung zeichnet sich durch eine kompakte und einfache Bauform aus.

## Patentansprüche

1. Verfahren zum Herstellen von Bauteilen mit einer dreidimensional geformten Oberfläche, durch Absenken mit einem elektrochemischen Abtragprozess, nämlich durch einen Precise Electro Chemical Machining (PECM) Prozess, mit folgenden Schritten:
a) Bereitstellen eines insbesondere vorgeformten Werkstücks mit einem bestimmten Aufmass;
b) Bereitstellen von zwei Arbeitselektroden, wobei die Kontur jeder Arbeitselektrode an die Kontur der herzustellenden Oberfläche angepasst ist;
c) Absenken der dreidimensional geformten Oberfläche durch Anordnen des vorgeformten Werkstücks und jeder Arbeitselektrode in einem Elektrolyten und durch Anlegen einer elektrischen Spannung bzw. eines elektrischen Stroms, wobei jede Arbeitselektrode im Sinne einer kreisförmigen Zustellbewegung um parallel zueinander verlaufende Achsen in Richtung auf das Werkstück bewegt werden,
**dadurch gekennzeichnet,**
**dass** der kreisförmigen Zustellbewegung der oder jeder Arbeitselektrode in Richtung auf das Werkstück eine pulsierende bzw. periodische Bewegung in Richtung der Zustellbewegung überlagert wird, um Spalte zwischen der oder jeder Arbeitselektrode und dem Bauteil einer Zwangsspülung mit Elektrolyt zu unterziehen.

2. Verfahren nach Anspruch 1,
**dadurch gekennzeichnet,**
**dass** als mechanisch pulsierende bzw. periodische Bewegung eine Schwingungsbewegung mit einer Amplitude zwischen 0,01 mm und 2,5 mm durchgeführt wird.

3. Verfahren nach einem der Ansprüche 1 bis 2,
**dadurch gekennzeichnet,**
**dass** die kreisförmige Zustellbewegung der oder jeder Arbeitselektrode zum Absenken der dreidimensional geformten Oberfläche mit einer Geschwindigkeit 0,01 mm/min und 2,50 mm/min erfolgt.

4. Verfahren nach einem oder mehreren der Ansprüche 1 bis 3,
**dadurch gekennzeichnet,**
**dass** der kreisförmigen Zustellbewegung der oder jeder Arbeitselektrode in Richtung auf das Werkstück weiterhin eine lineare Zustellbewegung überlagert wird.

5. Verfahren nach einem oder mehreren der Ansprüche 1 bis 3,
**dadurch gekennzeichnet,**
**dass** zum Absenken ein gepulster Gleichstrom bzw. eine gepulste Gleichspannung angelegt werden, wobei die Pulsfrequenz für den Gleichstrom bzw. die Gleichspannung zwischen 1 Hz und 10 kHz liegt.

6. Verfahren nach einem oder mehreren der Ansprüche 1 bis 4,
**dadurch gekennzeichnet,**
**dass** als dreidimensional geformte Oberflächen Saugseitenkonturen und Druckseitenkonturen an Laufschaufeln eines integral beschaufelter Rotors hergestellt werden; wobei ein integral beschaufelter Rotor aus einem Rotorgrundkörper und integral am Rotorgrundkörper befestigten Laufschaufeln, die ein bestimmtes Aufmass aufweisen, bereitgestellt wird; wobei weiterhin mindestens zwei Arbeitselektroden für mindestens eine Laufschaufel bereitgestellt werden, deren Kontur an die Kontur einer herzustellenden Saugseitenkontur und einer herzustellenden Druckseitenkontur der jeweiligen Laufschaufel angepasst ist; und wobei weiterhin zum gleichzeitigen Absenken der Saugseitenkontur und Druckseitenkontur im Bereich mindestens einer Laufschaufel die entsprechenden Arbeitselektroden im Sinne einer gegensinnigen, kreisförmigen Zustellbewegung in Richtung auf die jeweilige Laufschaufel bewegt werden.

7. Verfahren nach Anspruch 5,
**dadurch gekennzeichnet,**
**dass** die Arbeitselektroden zum Absenken der Saugseitenkontur und der Druckseitenkontur im Bereich der jeweiligen Laufschaufel um parallel zueinander verlaufende Achsen gegensinnig verschwenkt werden.

8. Verfahren nach Anspruch 6 oder 7,
**dadurch gekennzeichnet,**
**dass** die kreisförmige Zustellbewegung der Arbeitselektroden zum Absenken der Saugseitenkontur und der Druckseitenkontur im Bereich der jeweiligen Laufschaufel mit einer gleichmäßigen Geschwindigkeit erfolgt.

9. Vorrichtung zum Herstellen von Bauteilen mit einer dreidimensional geformten Oberfläche, durch Absenken mit einem elektrochemischen Abtragprozess, nämlich durch einen Precise Electro Chemical Machining (PECM) Prozess, mit zwei Arbeitselektroden (12), die an die Kontur der herzustellenden Oberfläche angepasst sind, wobei die Arbeitselektroden (12) an jeweils einem Träger (13) derart gelagert sind dass die jeweilige Arbeitselektrode (12) im Sinne einer kreisförmigen Zustellbewegung (20) in Richtung auf das Werkstück (11; 29) bewegbar ist, **dadurch gekennzeichnet, dass** ein Stellglied (18; 26) vorgesehen ist, das der kreisförmigen Zustellbewegung (20) der Arbeitselektrode (12) in Richtung auf Werkstück (11; 29) eine pulsierende bzw. periodische Bewegung. überlagert und dass die beiden Arbeitselektroden (12) derart in die Vorrichtung angeordnet sind dass sie auf Kreisbahnen um parallel zueinander verlaufende Achsen verschwenkbar sind.

10. Vorrichtung nach Anspruch 9,
**dadurch gekennzeichnet,**
**dass** dieselbe zum Herstellen von Saugseitenkonturen und Druckseitenkonturen an Laufschaufeln eines integral beschaufelter Rotors mindestens zwei Arbeitselektroden aufweist, nämlich eine erste Arbeitselektrode (12) die an die Kontur der herzustellenden Saugseitenkontur und eine zweite Arbeitselektrode (12) die an die Kontur der herzustellenden Druckseitenkontur der jeweiligen Laufschaufel angepasst ist, wobei jede der Arbeitselektroden (12) an jeweils einem Träger (13) derart gelagert ist, dass die Arbeitselektroden (12) in einer gegensinnigen sowie kreisförmigen Zustellbewegung in Richtung auf das Werkstück (29) bewegbar sowie aufeinander zu sowie voneinander weg schwenkbar sind.

11. Vorrichtung nach Anspruch 9 oder 10,
**dadurch gekennzeichnet,**
**dass** der oder jeder Träger (13) für eine Arbeitselektrode (12) an einem zweidimensional torsionssteifem Rahmen (17) derart gelagert ist, dass der Träger (13) und damit die entsprechende Arbeitselektrode (12) über mindestens ein an denselben angreifendes Stellglied (18) entlang der kreisförmigen Zustellbewegung (20) in Richtung auf das Werkstück (11; 29) bewegbar ist.

12. Vorrichtung nach einem oder mehreren der Ansprüche 9 bis 11,
**dadurch gekennzeichnet,**
**dass** der oder jeder Träger (13) einen Hebelarm (15) umfasst, wobei der jeweilige Hebelarm (15) entweder als Federstab ausgeführt oder über Festkörpergelenke (16) mit einem Rahmen (17) verbunden ist.

13. Vorrichtung nach einem oder mehreren der Ansprüche 9 bis 12,
**gekennzeichnet durch**
mindestens einen Anschlag (22), der die Endposition der oder jeder Arbeitselektrode (12) beim Bewegen derselben entlang der kreisförmigen Zustellbewegung in Richtung auf das Werkstück begrenzt.

## Claims

1. Method for producing components having a three-dimensionally formed surface by means of an erosion operation with an electrochemical ablation process, namely by means of a precise electrochemical machining (PECM) process, having the following steps:
a) provision of a workpiece, in particular a preformed workpiece, having a certain overmeasure;
b) provision of two working electrodes, wherein the contour of each working electrode is matched to the contour of the surface that is to be produced;
c) erosion of the three-dimensionally formed surface by arranging the pre-formed workpiece and each working electrode in an electrolyte and by applying an electric voltage or an electric current, wherein each working electrode is moved in the sense of a circular advancing movement about axes extending parallel to each other in the direction of the workpiece,
**characterised in that**
a pulsating or periodic movement in the direction of the advancing movement is superimposed upon the circular advancing movement of the or each working electrode in the direction of the workpiece in order to subject gaps between the or each working electrode and the component to forced rinsing with electrolyte.

2. Method according to claim 1,
**characterised in that**
an oscillating movement with an amplitude between 0.01 mm and 2.5 mm is performed as a mechanically pulsating or periodic movement.

3. Method according to one of claims 1 to 2, **characterised in that** the circular advancing movement of the or each working electrode for the purpose of eroding the three-dimensionally formed surface is effected at a rate of 0.01 mm/min and 2.50 mm/min.

4. Method according to one or more of claims 1 to 3,
**characterised in that**
a linear advancing movement is superimposed, furthermore, upon the circular advancing movement of the or each working electrode in the direction of the workpiece.

5. Method according to one or more of claims 1 to 3,
**characterised in that**
a pulsed direct current or a pulsed DC voltage is applied for erosion purposes, wherein the pulse frequency for the direct current or the DC voltage lies between 1 Hz and 10 kHz.

6. Method according to one or more of claims 1 to 4,
**characterised in that**
suction-side contours and pressure-side contours are produced as three-dimensionally formed surfaces on rotor blades of an integrally bladed rotor, wherein an integrally bladed rotor consisting of a rotor base body and rotor blades integrally secured on the rotor base body and having a certain overmeasure is provided, wherein, furthermore, at least two working electrodes are provided for at least one rotor blade, the contour of which is matched to the contour of a suction-side contour to be produced and a pressure-side contour to be produced of the respective rotor blade, and wherein, fv rthermore, in order to erode the suction-side contour and pressure-side contour simultaneously in the region of at least one rotor blade the corresponding working electrodes are moved in the sense of an opposite circular advancing movement in the direction of the respective rotor blade.

7. Method according to claim 5,
**characterised in that**
the working electrodes are swivelled in opposite directions about axes extending parallel to each other in order to erode the suction-side contour and the pressure-side contour in the region of the respective rotor blade.

8. Method according to claim 6 or 7,
**characterised in that**
the circular advancing movement of the working electrodes for the purpose of eroding the suction-side contour and the pressure-side contour in the region of the respective rotor blade is effected at a uniform rate.

9. A device for producing components having a three-dimensionally formed surface by means of an erosion operation with an electrochemical ablation process, namely by means of a precise electrochemical machining (PECM) process, having two working electrodes (12) which are matched to the contour of the surface that is to be produced, wherein the working electrodes (12) are mounted on a respective carrier (13) in such a way that the respective working electrode (12) can be moved in the sense of a circular advancing movement (20) in the direction of the workpiece (11; 29), **characterised in that** a control element (18; 26) is provided that superimposes a pulsating or periodic movement upon the circular advancing movement (20) of the working electrode (12) in the direction of the workpiece (11; 29), and **in that** the two working electrodes (12) are arranged in the device in such a way that they can be swivelled on circular paths about axes extending parallel to each other.

10. A device according to claim 9,
**characterised in that** it has at leasm two working electrodes for the purpose of producing suction-side contours and pressure-side contours on rotor blades of an integrally bladed rotor, namely a first working electrode (12) matched to the contour of the suction-side contour to be produced and a second working electrode (12) matched to the contour of the pressure-side contour to be produced of the respective rotor blade, wherein each of the working electrodes (12) is mounted on a respective carrier (13) in such a way that the working electrodes (12) can be moved in an opposite and also circular advancing movement in the direction of the workpiece (29) and also can be swivelled both towards each other and also away from each other.

11. A device according to claim 9 or 10,
**characterised in that**
the or each carrier (13) for a working electrode (12) is mounted on a two-dimensionally torsion-proof frame (17) in such a way that the carrier (13) and thus the corresponding working electrode (12) can be moved by way of at least one control element (18) acting upon the same, following the circular advancing movement (20) in the direction of the workpiece (11; 29).

12. A device according to one or more of claims 9 to 11,
**characterised in that**
the or each carrier (13) comprises a lever arm (15), wherein the respective lever arm (15) is either constructed as a spring bar or is connected to a frame (17) by way of solid joints (16).

13. A device according to one or more of claims 9 to 12,
**characterised by**
at least one stop (22) which delimits the end position of the or each working electrode (12) during movement of the same following the circular advancing movement in the direction of the workpiece.

## Revendications

1. Procédé pour fabriquer des composants avec une surface formée en trois dimensions, par rabaissement avec un processus d'enlèvement électrochimique, à savoir par un processus, d'usinage électrochimique de précision (PECM), présentant les étapes suivantes :
a) mettre à disposition une pièce à usiner en particulier préformée avec une dimension déterminée ;
b) mettre à disposition deux électrodes de travail, le contour de chaque électrode de travail étant adapté au contour de la surface à fabriquer ;
c) abaisser la surface formée en trois dimensions par agencement de la pièce à usiner préformée et de chaque électrode de travail dans un électrolyte et par application d'une tension électrique ou d'un courant électrique, chaque électrode de travail étant déplacée au sens d'un mouvement d`avanee circulaire autour d'axes s'étendant parallèlement les uns aux autres en direction de la pièce à usiner,
**caractérisé en ce**
**que** le mouvement d'avance circulaire de la ou de chaque électrode de travail en direction de la pièce à usiner est superposé à un mouvement, pulsatoire ou periodique en direction du mouvement d'avance afïn de soumettre des fentes entre la ou chaque électrode de travail et le composant à un rinçage forcé avec l'électrolyte.

2. Procédé selon la revendication 1,
**caractérisé en ce**
**qu'**un mouvement d'oscillation avec une amplitude comprise entre 0,01 et 2,5 mm est réalisé comme un mouvement mécanique pulsatoire ou périodique.

3. Procédé selon l'une quelconque des revendications 1 à 2,
**caractérisé en ce**
**que** le mouvement d'avance circulaire de la ou de chaque électrode de travail pour d'abaissement de la surface formée en trois dimensions est réalisé à une vitesse comprise entre 0,01 et 2,50 mm/min.

4. Procédé selon l'une ou plusieurs quelconques des revendications 1 à 3,
**caractérisé en ce**
**que** le mouvement d'avance circulaire de la ou de chaque électrode de travail en direction de la pièce, à usiner est superposé en outre à un mouvement d'avance linéaire.

5. Procédé selon l'une ou plusieurs quelconques des revendications 1 à 3,
**caractérisé en ce**
**qu'**un courant continu pulsé ou une tension continue pulsée est appliqué(e) pour l'abaissement, la fréquence de pulsation pour le courant continu ou la tension continue étant comprise entre 1 et 10 kHz.

6. Procédé selon l'une ou plusieurs quelconques des revendications 1 à 4,
**caractérisé en ce**
**que** des contours de côté aspiration et des contours de côté refoulement sur des pales d'un rotor à pales intégrales sont fabriqués comme des surfaces formées en trois dimensions ; un rotor à pales intégrées composé d'un corps de base de rotor et de pales fixées intégrées sur le corps de base de rotor et présentant une dimension déterminée étant mis à disposition ; au moins deux électrodes de travail pour au moins une pale étant en outre mises à disposition, dont le contour est adapté au contour d'un contour de côté aspiration à fabriquer et d'un contour de côté refoulement à fabriquer des pales respective et outre l'abaissement simultané des contour de côté aspiration et contour de côté refoulement dans la zone d'au moins une pale, les électrodes de travail correspondante étant déplacées au sens d'un mouvement d'avance circulaire en sens inverse en direction de la pale respective.

7. Procédé selon la revendication 5,
**caractérisé en ce**
**que** les électrodes de travail sont pivotées en sens inverse pour l'abaissement du contour de côté aspiration et du contour de côté refoulement dans la zone des pales respectives autour d'axes s'étendant parallèlement les uns aux autres.

8. Procédé selon la revendication 6 ou 7,
**caractérisé en ce**
**que** le mouvement d'avance circulaire des électrodes de travail pour l'abaissement du contour de côté aspiration et du contour de côté refoulement dans la zone des pales respectives est réalisé à une vitesse régulière.

9. Dispositif pour fabriquer des composants avec une surface formée en trois dimensions, par abaissement avec un processus d'enlèvement électrochimique, à savoir par un processus d'usinage électrochimique de précision (PECM), avec deux électrodes de travail (12) qui sont adaptées au contour de la surface à fabriquer, les électrodes de travail (12) étant logées respectivement sur un support (13) de telle manière que l'électrode de travail respective (12) puisse être déplacée au sens d'un mouvement d'avance (20) circulaire en direction de la pièce à usiner (11 ; 29), **caractérisé en ce qu'**un organe de commande (18 ; 26) est prévu, lequel superpose au mouvement d'avance (20) circulaire de l'électrode de travail (12) en direction de la pièce à usiner (11 ; 29) un mouvement pulsatoire ou apériodique et **en ce que** les deux électrodes de travail (12) sont disposées dans le dispositif de telle manière qu'elles puissent être pivotées sur des trajectoires circulaires autour d'axes s'étendant parallèlement les uns aux autres.

10. Dispositif selon la revendication 9,
**caractérisé en ce**
**que** celui-ci présente pour la fabrication de contours de côté aspiration et de contours de côté refoulement sur des pales d'un rotor à pales intégrées au moins deux électrodes de travail, à savoir une première électrode de travail (12) qui est adaptée au contour du contour de côté aspiration à fabriquer et une seconde électrode de travail (12) qui est adaptée au contour du contours de côté refoulement à fabriquer des pales respectives, chacune des électrodes de travail (12) étant logée sur respectivement un support (13) de telle manière que les électrodes de travail (12) puissent être déplacées dans un mouvement d'avance circulaire ainsi qu'en sens inverse en direction de la pièce à usiner (29) et puissent être pivotées l'une vers l'autre et loin l'une de l'autre.

11. Dispositif selon la revendication 9 ou 10,
**caractérisé en ce**
**que** le ou chaque support (13) pour une électrode de travail (12) est logé sur un cadre (17) rigide à la torsion en deux dimensions de telle manière que le support (13) et ainsi l'électrode de travail (12) correspondante puissent être déplacés par le biais d'au moins un organe de commande (18) agissant sur celui-ci le long du mouvement d'avance (20) circulaire en direction de la pièce à usiner (11 ; 29).

12. Dispositif selon l'une ou plusieurs quelconques des revendications 9 à 11,
**caractérisé en ce**
**que** le ou chaque support (13) comporte un bras de levier (15), le bras de levier respectif (15) étant réalisé comme une barre de ressort ou relié par des articulations solides (16) à un cadre (17).

13. Dispositif selon l'une ou plusieurs quelconques des revendications 9 à 12,
**caractérisé par**
au moins une butée (22) qui limite la position finale de la ou de chaque électrode de travail (12) lors de son déplacement le long du mouvement d'avance circulaire en direction de la pièce à usiner.
